# EUROPÄISCHE PATENTSCHRIFT

(11) **EP 2 103 239 B1**
(45) Veröffentlichungstag und Bekanntmachung des Hinweises auf die Patenterteilung: **20.06.2012**
(21) Anmeldenummer: 09003731.8
(22) Anmeldetag: 16.03.2009
(51) Int. Cl.: A47J 37/07

(54) **Speisenträgerhalterung**
Skewer holder
Support de brochette

(30) Priorität: 17.03.2008 DE 102008014992
(43) Veröffentlichungstag der Anmeldung: 23.09.2009
(73) Patentinhaber: Reimelt, Jan Thomas, 58455 Witten (DE)
(72) Erfinder: Reimelt, Jan Thomas, 58455 Witten (DE)
(74) Vertreter: BRP Renaud & Partner

(56) Entgegenhaltungen:
- CA-A1- 2 436 867
- DD-A- 92 523
- DE-A1- 1 911 873

## Beschreibung

Die Erfindung betrifft eine Speisenträgerhalterung.

Speisenträgerhalterungen sind bekannt. Hierbei liegen allerdings einige Nachteile vor, die sich v. a. im Gebrauch zeigen. Die bekannten Einrichtungen sind oftmals relativ groß, also auch entsprechend unhandlich, und/oder sie verfügen bauartbedingt nur über unzureichende Haltesicherheit auf dem Grillrost.

Die einfachsten Speisenträgerhalterungen bestehen aus einem meist rechteckig geformten Blechrahmen, in dessen Oberseite gegenüberliegende U-förmige Kerben zur Aufnahme der Speisenträger eingebracht wurden. Der Metallrahmen wird dann ohne weitere Formen der Befestigung auf den Grillrost gestellt.

Neben dem sehr unsicheren Sitz auf dem Grillrost infolge der losen Auflage, liegen weitere Nachteile dieser Ausführungsformen im hohen Platzbedarf, sowie die nicht vorhandene Möglichkeit zur positionshaltigen Lagekontrolle der Speisenträger während des Garvorgangs.

Es sind bereits Speisenträgerhalterungen für Grilleinrichtungen bekannt geworden, die für die genannten Aspekte Verbesserungen anbieten.

Ein Beispiel hierfür zeigt die DD 92 523.

Ein weiteres Beispiel zeigt die CA 2436867 (siehe die Figuren 11A, 11B).

Doch auch bei diesen Ausführungen bleiben verschiedene Mängel bestehen. Dies betrifft v. a. die bereits erwähnte Haltesicherheit, aber auch der Platzbedarf ist nach wie vor unvorteilhaft.

Letztlich ergibt sich bei den bekannten Einrichtungen (wie DD 92 523) aber die Frage nach der möglichst universellen Anwendbarkeit auf den verschiedenartigsten Grillrosten. Diese wird zwar grundsätzlich angesprochen, sie ist allerdings im gezeigten Beispiel (DD 92 523) nicht mit ein und derselben Speisenträgerhalterung umsetzbar.

Im gezeigten Beispiel (DD 92 523) befinden sich die Aufnahmen für die Speisenträger jeweils am distalen Ende eines weit auskragenden Schenkels, wodurch die Haltesicherheit der Speisenträgerhalterung auf dem Rost beim Ein- bzw. Ausfädeln des Speisenträgers infolge großer hebelbedingter Krafteinwirkung deutlich vermindert wird.

Dies kann u. U. zu Verletzungen führen.

Der im Beispiel (DD 92 523) nach wie vor unnötig hohe Platzbedarf resultiert aus der unkompakten Geometrie der Speisenträgerhalterung und zieht entsprechende Nachteile u. a. hinsichtlich Transport, Reinigung und Aufbewahrung nach sich. Der wesentliche Mangel aber bleibt in der zwar intendierten, jedoch nicht erreichten maximalen Anwendungsbreite hinsichtlich der Verwendung auf Rosten mit unterschiedlichen Bauformen.

Das Ausführungsbeispiel zeigt die Verwendung der Speisenträgerhalterung quer zu den Roststäben des Grillrostes. Hier kommen außerdem zwei unterschiedliche Ausführungstypen der Speisenträgerhalterung zum Einsatz, die die Toleranzen zwischen unterschiedlich beabstandeten Grillroststäben ausgleichen sollen, um dadurch eine größere Anwendungsbreite zu gewährleisten.

Eine Anwendung derselben Speisenträgerhalterung zum Halten des Spießes parallel zu den Roststäben ist in diesem Ausführungsbeispiel nicht möglich, denn hierzu müssten die auskragenden, die Aufnahmen beherbergenden Schenkel jeweils um 90° so verdreht werden, dass sich die Aufnahmen für die Speisenträger nach Einrasten zwischen zwei gleichen Roststäben wieder parallel zueinander gegenüberstehen. Eine Ausführung zum parallelen Halten ist zwar in DD 92 523 angedacht, diese erlaubt jedoch nicht eine gleichzeitige senkrechte Ausrichtung des Spießes.

Hierdurch bleibt die höchstmögliche Anwendungsbreite von letztlich nur einer einzigen, kompakt gestalteten Speisenträgerhalterung mit maximal optimierter Haltesicherheit unerreicht.

Ein wichtiger Grund für den Einsatz einer Speisenträgerhalterung ist die Eingangs erwähnte Möglichkeit zur Lagekontrolle des Speisenträgers während des Garvorgangs.

Die Möglichkeit zur Lagekontrolle ist in dem angeführten Beispiel zwar ebenfalls gegeben, jedoch ist diese in der praktischen Anwendung vergleichsweise unkomfortabel, u. U. aber sogar mit Sicherheitsrisiken verbunden.

Betrachtet man nämlich Anordnung und Ausführung der Auflager für den Speisenträger in der Halterung, insbesondere diejenige, für die Spitze des Selbigen, so ist hier durchaus ein solides Maß an Übung und Feingefühl notwendig, um z. B. eine Lageänderung des Speisenträgers ohne Verkanten, Abrutschen und/oder erneutes Einfädeln in die Halterung durchzuführen. Je nach Art und Dauer eines solchen Eingriffs besteht die Gefahr von Verbrennungsverletzungen.

Aufgabe der vorliegenden Erfindung ist es daher eine Speisenträgerhalterung der bekannten Gattung so umzubilden, dass sie:
- sie über eine verbesserte Haltesicherheit verfügt,
- und dabei möglichst einfach und sicher in der Anwendung ist.
   Ferner sollte sie: ein wahlweises Anordnen des Speisenträgers parallel und/oder senkrecht zu den Roststäben gestatten,
- und einen geringeren Material- und Raumbedarf aufweisen.

Die erfindungsgemäße Lösung dieser Aufgabe erfolgt durch eine Speirenträgerhalterung gemäss Anspruch 1.

Diese Formgebung geht grundsätzlich vom Verzicht weit auskragender Bauteile aus, die samt der Aufnahmen für die Speisenträger von einer kompakten Bauweise geprägt ist.

Eine nach dem Hauptanspruch gestaltete Speisenträgerhalterung ermöglicht somit erstmals die vereinfachte und haltesichere Anwendung auf nahezu allen handelsüblichen Grillrosten mit feststehenden Roststäben.

Die vorteilhafte Ausgestaltung dieser Erfindung besteht darin, dass die Aufnahmen für die Speisenträger nahe am Kapitell der Speisenträgerhalterung oder am Kapitell selbst angeordnet sind. Dadurch werden weit auskragende, die Aufnahmen tragenden Bauteile vermieden, die die Haltesicherheit der Halterung auf dem Rost infolge hebelbedingter Krafteinwirkung, z. B. durch Betätigen des Speisenträgers, während der Benutzung vermindern können.

Um ein maximal angelegtes Anwendungsspektrum von nur einer einzigen Bauform der Speisenträgerhalterung auf unterschiedlichen Rosten zu gewährleisten, sind nahe am Kapitell oder am Kapitell selbst zwei Aufnahmen vorgesehen, wobei die beiden Aufnahmeachsen rechtwinklig zueinander angeordnet sind. Hierdurch kann der Speisenträger wahlweise parallel oder senkrecht zu den Roststäben gehalten werden.

Um eine möglichst einfache und sichere Anwendung der Erfindung zu gewährleisten, ist die Aufnahme unmittelbar am Kapitell selbst anzuordnen. Hierdurch ist die Aufnahme u. a. schnell und unkompliziert erreichbar.

Es ist auch möglich, dass die Aufnahme am proximalen Ende des Schenkels angeordnet ist. Diese Sonderform der Speisenträgerhalterung erhöht den sowohl Komfort während der Anwendung, als auch das Anwendungsspektrum.

Weiterhin ist es möglich, dass die Aufnahme an einem von dem mit der Kehle versehenen Schenkel gesonderten Schenkel angeordnet ist. Auch diese

Sonderform erweitert die komfortable Anwendung der Speisenträgerhalterung auf Grillroste mit unterschiedlich verlaufenden Richtungen der Roststäbe.

Darüber hinaus besteht die Möglichkeit, dass die Aufnahme als ein in das Kapitell eingeformter Kanal ausgeführt ist. Hierdurch wird bereits in der Basisform der Speisenträgerhalterung die einfache und unkomplizierte Ablage, bzw. Lageänderung des Speisenträgers gewährleistet.

Eine erweiterte Sonderform der Speisenträgerhalterung ist dadurch gekennzeichnet, dass die Aufnahme als ein Trichterloch ausgeführt ist, welches sich vulkanartig aus der Speisenträgerhalterung erhebt. Hierdurch wird u. a. das zielsichere einfädeln und Wenden des Speisenträgers gewährleistet.

Ein Merkmal dieser Sonderform besteht darin, dass die Aufnahmeachse des Trichterlochs die Grillrost-Ebene durchstößt. Diese führt im Weiteren zum Sichern des Speisenträgers gegen axiales Verrutschen während des Garvorgangs.

Ein Vorteil hinsichtlich der möglichst einfachen Handhabung der Speisenträgerhalterung besteht darin, dass die Speisenträgerhalterung zwei mit jeweils einer Kehle versehene Schenkel umfasst, die spiegelsymmetrisch zueinander angeordnet sind.

Zwecks der Reduktion von Materialaufwand und einer rationellen Fertigung wird vorgesehen, dass die Speisenträgerhalterung aus einem einzigen Federblech gefaltet ist.

Zwecks der Minimierung von Materialaufwand ist es ebenso möglich, dass die Speisenträgerhalterung aus Federdraht gebogen ist.

Eine besonders vorteilhafte Ausführungsform umfasst, wie nachstehend beschrieben, zwei Teile A und B;

Teil A, kann paarweise verwendet werden. Teil B dient als Komfort- und Sicherheitserweiterung. Zur Anwendung der Erfindung benötigt man folglich 2 x Teil A oder 1 x Teil und 1 x Teil B.

Das unverformte Federblech des Teil A der Speisenträgerhalterung besteht aus einem einzigen, im Wesentlichen rechteckigen Federblech, in dem sich zentriert ein im Wesentlichen ebenfalls rechteckiger Ausschnitt befindet. Durch mehrere parallel angeordnete und spiegelsymmetrische Faltungen quer zur Längsachse der rechteckigen Grundform entsteht eine V - förmige Gesamtform des funktionalen Basistyps Teil A der Speisenträgerhalterung.

In der Nähe des Scheitelpunktes der beiden jeweils mit einer Kehle versehenen Schenkel entsteht durch die Falzkanten der Bereich mit der Aufnahme für die Speisenträger. Betrachtet man die Speisenträgerhalterung aber der Ansicht nach auf den beiden V- förmigen Schenkeln stehend, so ist der Bereich des Scheitelpunktes nach oben entgegengesetzt ausgerichtet und demnach als Kapitell zu bezeichnen.

Durch die parallel verlaufenden Falzkanten am Kapitell, und in Einheit mit dem zentriert angeordneten Ausschnitt im Material entstehen infolge der Spiegelsymmetrie der Gesamtform unmittelbar am Kapitell zwei Aufnahmen, jeweils zur Aufnahme eines Speisenträgers, wobei die beiden Aufnahmeachsen rechtwinkelig zueinander angeordnet sind. Die Aufnahmen selbst sind dadurch gekennzeichnet, dass sie jeweils als ein in das Kapitell eingeformter Kanal ausgeführt sind.

Das unverformte, T - förmige Federblech des Teil B der Speisenträgerhalterung besteht im Wesentlichen aus einem viereckigen Basisabschnitt (Kapitell), an welchen zwei im Wesentlichen rechteckige Schenkelabschnitte und ein im Wesentlichen viereckiger, weiterer Aufnahmeabschnitt angrenzen, wobei die Grenzen der Abschnitte durch Falzkanten gebildet werden.

Die beiden spiegelsymmetrisch gegenüberliegenden, jeweils mit einer Kehle versehenen Schenkel, zeichnen sich dadurch aus, dass die Aufnahme für den Speisenträger jeweils in der Nähe des Kapitells, also am proximalen Ende des Schenkels angeordnet ist. Dies gilt gleichermaßen für einen von dem mit der Kehle versehenen Schenkel gesondertem Aufnahmeschenkel.

Alle Aufnahmeschenkel erstrecken sich in einem Winkel ungleich 90° vom Kapitell fort, sind dabei aber orthogonal zueinander angeordnet. Die Aufnahmeschenkel sind weiterhin dadurch gekennzeichnet, dass die Aufnahme für den Speisenträger als ein Trichterloch ausgeführt ist, welches sich vulkanartig aus der Speisenträgerhalterung erhebt.

Aus der Winkelstellung aller Aufnahmeschenkel gegenüber der Ebene des Kapitells, welches sich parallel zur Grillrostebene befindet, folgt, dass die Aufnahmeachse eines jeweiligen Trichterlochs die Grillrostebene durchstößt. Der in das Trichterloch eingeführte Spieß wird folglich in dem Trichterloch geklemmt.

In einer Variante mit minimalem Materialaufwand, ist es ebenso möglich, dass die Speisenträgerhalterung aus Federdraht gebogen ist. In diesem Fall ist das Gewicht auf ein Maximum reduzierbar, der Benutzerkomfort gegenüber den o. b. Varianten ist jedoch eingeschränkt.

Das Anwendungsgebiet ist vielfältig. Es kommt im Hobbybereich (auf dem Gartengrill) sowie auch im gewerblichen Bereich (Grills auf öffentlichen Veranstaltungen, für Fleischerei - oder Gastronomiebetriebe) zum Einsatz.

Anhand der Figuren soll nun eine beispielhafte Ausführungsform der Erfindung vorgestellt und ihre Vorteile nochmals verdeutlicht werden. Es zeigen:
- Figur 1a - 1d:: Speisenträgerhalterung Teil A von oben nach unten: das unverformte Ausgangsmaterial als Federblech (a), die daraus gefaltete Klemmfeder in der Aufsicht (b), in der Vorderansicht (c) und in der Seitenansicht (d).
- Figur 2a - 2d:: Speisenträgerhalterung Teil B von oben nach unten: das unverformte Ausgangsmaterial als Federblech (a), die daraus gefaltete Klemmfeder in der Aufsicht (b), in der Vorderansicht (c) und in der Seitenansicht (d).
- Figur 3a:: Speisenträgerhalterung in der Paarweisen Anwendung von Teil A mit einem schematisch bestückten Speisenträger als applizierte Einheit auf einem Grillrost parallel zur Achse eines Roststabs über einer Wärmequelle in der Seitenansicht
- Figur 3b:: Speisenträgerhalterung in der Paarweisen Anwendung von Teil A mit einem schematisch bestückten Speisenträger als applizierte Einheit auf einem Grillrost quer zur Achse der Roststäbe über einer Wärmequelle in der Seitenansicht.
- Figur 4a:: Oben: Speisenträgerhalterung von Teil A und Teil B mit einem schematisch bestückten Speisenträger als applizierte Einheit auf einem Grillrost parallel zur Achse eines Roststabs über einer Wärmequelle in der Seitenansicht.
- Figur 4b:: Speisenträgerhalterung von Teil A und Teil B mit einem schematisch bestückten Speisenträger als applizierte Einheit auf einem Grillrost quer zur Achse der Roststäbe über einer Wärmequelle in der Seitenansicht.

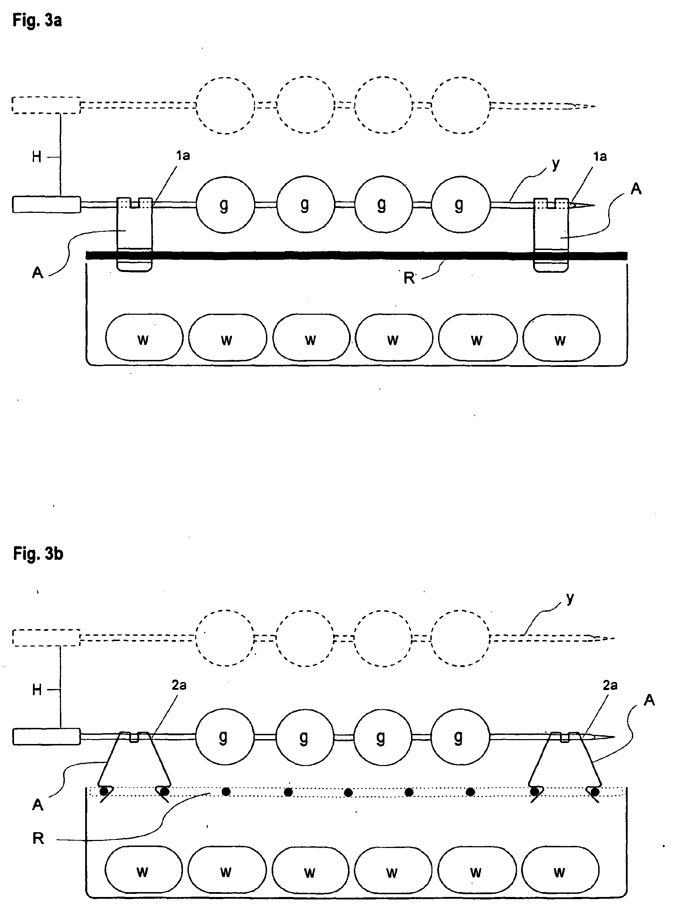

In den Figuren 3a - 4b gestrichelt dargestellt ist jeweils die Position des Speisenträgers, in der das Ein-/ Ausführen, bzw. eine Lageänderung durchgeführt wird.

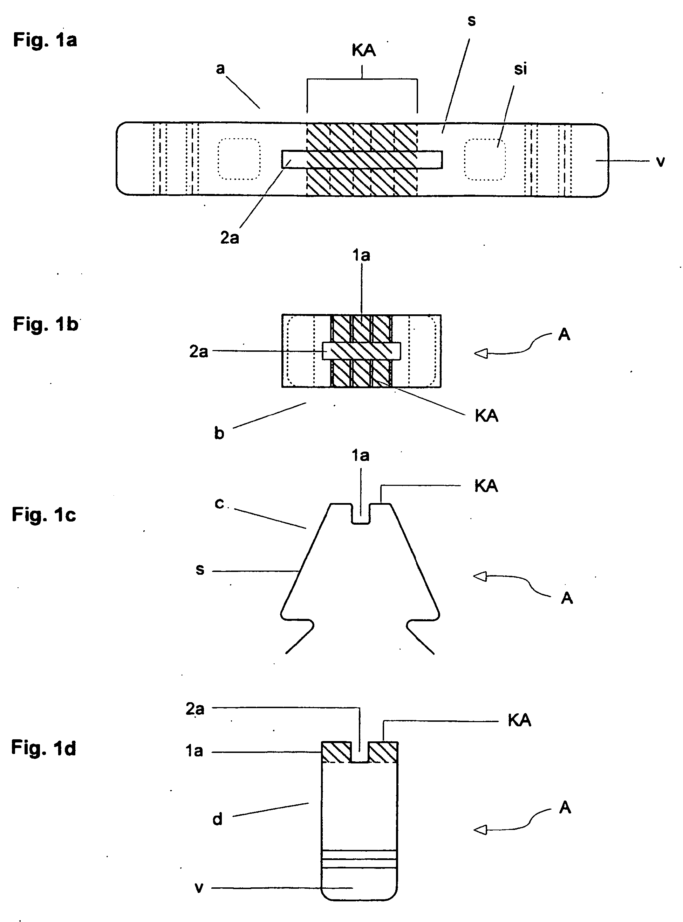

In der Figur 1a zeigt sich die Speisenträgerhalterung Teil A bestehend aus einem ursprünglich unverformten, rechteckigen Federblech (a) mit einem zentriert angeordneten rechteckigen Ausschnitt (2a). Der schraffiert dargestellte Bereich um den Ausschnitt (2b) wird so gefaltet, dass er zwei Aufnahmen (1 a) und (2a) jeweils für einen Speisenträger ausbildet, die rechtwinkelig zueinander angeordnet sind und so den Bereich des Kapitells (KA) der Speisenträgerhalterung Teil A bilden. Beide Aufnahmen für den Speisenträger sind jeweils als ein in das Kapitell eingeformter Kanal ausgeführt, wobei der Kanal für die Aufnahme (2a) durch die Faltung der parallel verlaufenden Falzkanten im Ausgangsmaterial entsteht.

Vom Kapitell (KA) aus erstrecken sich spiegelsymmetrisch die mit Federkraft beaufschlagten Schenkel (s) fort, die an ihrem distalen Ende eine V-förmige Kehle (v) aufweisen, welche dafür eingerichtet ist, eine Grillrost-Strebe (R) zumindest teilweise zu umgreifen. Zwecks konstruktiv notwendiger Versteifung kann Teil A an allen dafür erforderlichen Stellen mit mindestens einer Sicke (si) verstehen sein.

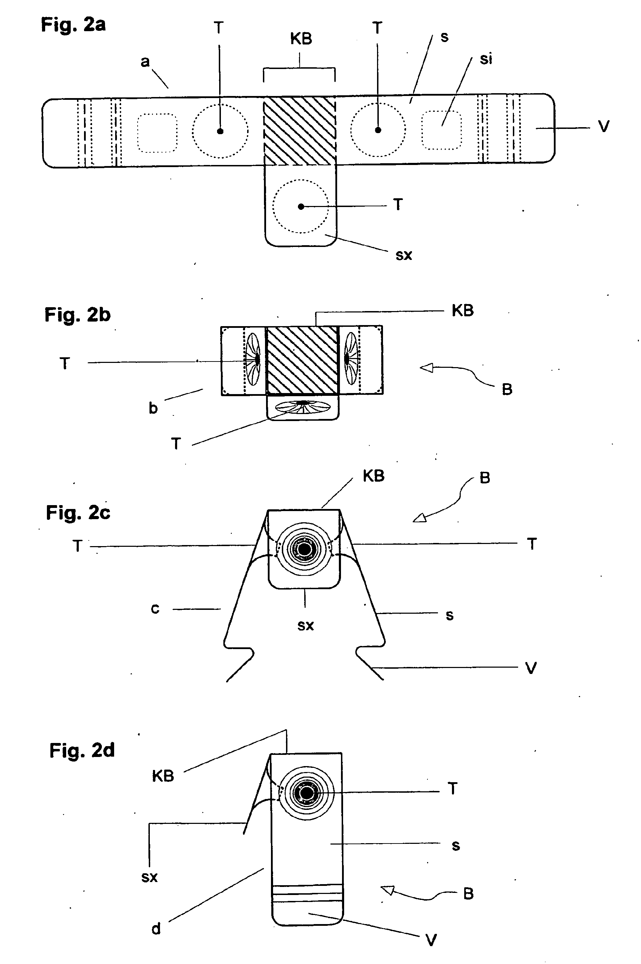

In der Figur 2a zeigt sich die Speisenträgerhalterung Teil B bestehend aus einem ursprünglich unverformten, T - förmigen Federblech (b) mit einem zentriert angeordneten Bereich (KB), der schraffiert dargestellt ist. Im fertig gefalteten Teil B stellt dieser schraffierte Bereich dann das Kapitell (KB) dar, von dem aus sich die mit Federkraft beaufschlagten Schenkel (s), bzw. (sx) fort erstrecken, die orthogonal zueinander verdreht sind. Alle Schenkel weisen in der Nähe des Kapitells (KB), bzw. an ihrem proximalen Ende je mindestens eine Aufnahme (T) für einen Speisenträger auf, deren Aufnahmeachse die Grillrostebene durchstößt. Diese Aufnahme ist als Trichterloch (T) ausgeführt. Sie erhebt sich vulkanartig aus der Speisenträgerhalterung und erfüllt verschiedene Funktionen.

Die mit Aufnahme (T) im Teil B der Speisenträgerhalterung wird jeweils in ihrer longitudinalen Ausrichtung achsensymmetrisch zum Mittelpunkt der Aufnahmen (1a) bzw. (2a) im Teil A ausgerichtet auf den Grillrost gesteckt und besteht aus einem vulkanartig nach innen geformten Trichterloch (T), das zunächst zur einfachen und sicheren Einführung des an seiner Spitze vorzugsweise kegelartig geformten Speisenträgers (y) dient.

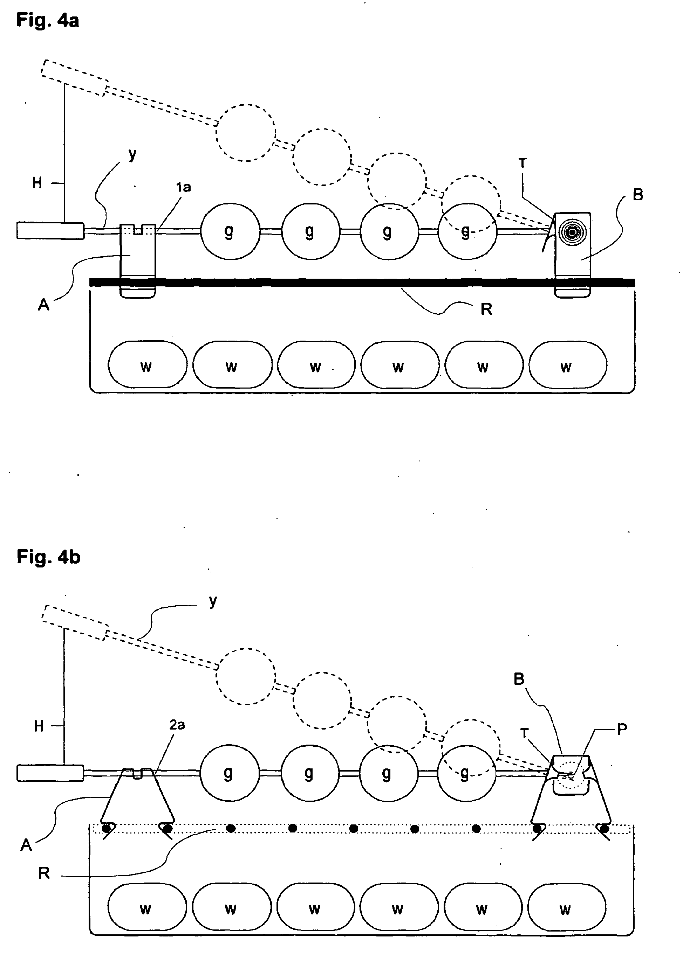

Im Weiteren dient die Aufnahme (T) der sicheren und problemlosen Führung des Speisenträgers (y) während einer Drehbewegung. Die Aufnahme (T) für die Spitze (P) des Speisenträgers (y) sorgt letztlich über die Gesamtformgebung des Teil B der Speisenträgerhalterung dafür, dass die Spitze (P) des Speisenträgers während der Benutzung keinen äußeren Einwirkungen ausgesetzt wird. Durch die Ausformung von (KB) des Teil B bleibt die Spitze (P) des Speisenträgers (y) stets und ohne die Möglichkeiten einer direkten Berührung unter einer Art überdachter Schutzabdeckung verborgen, wie dies besonders deutlich in der Figur 4b ersichtlich ist.

Vom Kapitell des Teil B aus strecken sich spiegelsymmetrisch die mit Federkraft beaufschlagten Schenkel (s) fort, die an ihrem distalen Ende eine V-förmige Kehle (v) aufweisen, welche dafür eingerichtet sind, eine Grillrost-Strebe (R) zumindest teilweise zu umgreifen. Zwecks konstruktiv notwendiger Versteifung, kann die Klemmfeder Teil B an allen dafür erforderlichen Stellen mit mindestens einer Sicke (si) versehen sein.

In den Figuren 3 und 4 zeigen sich die Teile A - A und A - B der Erfindung in der Seitenansicht nach Art und Weise ihrer vorgesehenen Anwendung und im Zusammenhang mit einem von der Bauart entsprechenden Speisenträger (y) über einer Wärmequelle (W). Der Speisenträger ist in diesem Fall ein Grillspieß aus Metall, schematisch bestückt mit Grillgut (g) und einem Holzgriff (H), jedoch können hier auch andersartige Speisenträger verwendet werden, z. B. aufklappbare Speisenträger für Fisch, bzw. Meeresfrüchte oder auch Einwegspeisenträger von adäquater Form und Materialität.

Die Figuren 3 und 4 machen zunächst das maximale Anwendungsspektrum der Speisenträgerhalterung deutlich, denn durch die orthogonal zueinander stehende Ausgestaltung der Aufnahmen (1a), (2a), bzw. (T), ist es unerheblich, ob die Grillroststäbe (R) parallel oder quer zur Achse des Speisenträgers (y) angeordnet verlaufen, wie es jeweils in Fig. 3a bzw. Fig. 4a (parallel zu den Roststäben), bzw. in Fig. 3b bzw. Fig. 4b (quer zu den Roststäben) ersichtlich ist.

Die Figuren 3 und 4 zeigen auch die Aspekte einer sicheren und komfortablen Benutzbarkeit, etwa hinsichtlich des Einfädelns oder einer unkomplizierten Lageänderung des Speisenträgers (y).

Die Figur 3a/b zeigt die Anwendung der Speisenträgerhalterung von zwei baugleichen Teilen A und einem Grillspieß (y) als Basislösung. Dabei werden die beiden Teile A - A mit den Aufnahmen (v) in Abstimmung auf die nutzbare Länge des Speisenträgers (y) so zwischen zwei parallel verlaufende Roststäbe (R) geklemmt, dass auch eine sichere händische Führung am Handgriff (H) mit ausreichendem Abstand zur Wärmequelle (W) gewährleistet bleibt.

Der Speisenträger (y) verweilt während des Garvorgangs verdrehsicher und beabstandet zum Grillrost (R) in den Aufnahmen (1a) bzw. (2a), die sich jeweils als ein in das Kapitell (KA) eingeformter Kanal achsensymmetrisch gegenüberliegen. Eine Drehbewegung des Speisenträgers (y) (gestrichelt dargestellt) kann in diesem Fall einfach nach dem senkrechten Anheben des Speisenträgers (y) aus beiden Aufnahmen (1a) bzw. (2a) erfolgen.

Die Haltesicherheit der Speisenträgerhalterung auf dem Grillrost bleibt bei der Verwendung der Basislösung zweier Teile A - A in vollem Umfang gewährleistet, denn bei sachgerechter Benutzung wirken keine die Haltesicherheit einschränkenden Kräfte auf die Teile A - A der Speisenträgerhalterung ein.

Die Figur 4a/b zeigt die Anwendung der Speisenträgerhalterung von zwei unterschiedlichen Teilen A und B sowie einem Grillspieß (y) als optionale Komfortlösung.

Für die Applikation der Speisenträgerhalterung mit zwei unterschiedlichen Teilen A und B auf einem Grillrost (R) gilt sinngemäß dasselbe, wie für Figur 3a/b bereits beschrieben.

Zum Einführen des Speisenträgers (y) in die Speisenträgerhalterung wird dieser deckungsgleich zur Aufnahmeachse von (T) im Teil B gebracht (gestrichelt dargestellt), mit der Spitze (P) in (T) eingesetzt und anschließend in (1a), bzw. (2a) von Teil A abgelegt.

Zur Drehbewegung wird der Speisenträger (y) nur an seinem Haltegriff (H) ein Stück weit nach oben aus der Aufnahme (1a) bzw. (2a) im Teil A herausgehoben, bis er sich etwa wieder deckungsgleich zur Aufnahmeachse von (T) im Teil B befindet (gestrichelt dargestellt), in die gewünschte Lage gedreht und anschließend wieder in der Aufnahme (1a) bzw. (2a) im Teil A abgelegt. Dabei verbleibt er mit seiner Spitze (P) in dem Trichterloch der Aufnahme (T) und kann auf diese Weise komfortabel, zentriert und sicher gedreht werden, ohne das die Spitze (P) äußeren Krafteinflüssen ausgesetzt ist.

In dem gezeigten Ausführungsbeispiel sind die Drehbewegungen, des Speisenträgers (y) hinsichtlich seines viereckigen Querschnitts durch 90° Schritte in eine beliebige Richtung gekennzeichnet, die von der Aufnahme (1a), bzw. (2a) im Teil A entsprechend ihrer Formgebung begrenzt wird. Sowohl der Querschnitt des Speisenträgers, sowie die Aufnahmen (1 a), bzw. (2a) können auch polygonal geformt sein.

Die Aufnahme (T) für die Spitze (P) des Speisenträgers (y) dient des Weiteren einer Sicherung des Speisenträgers gegen sein axiales Verrutschen während des Garvorgangs. Dies wird durch das drehmomentbedingte Verkanten des Speisenträgers in der Aufnahme (T) erreicht, nachdem er die Aufnahmeachse von (T) verlässt, die die Grillrostebene durchstößt und in der Aufnahme (1a), bzw. (2a) abgelegt wird.

Die Haltesicherheit des Teil B der Speisenträgerhalterung bleibt auch in diesem Fall erhalten, denn die einwirkenden Momente werden gezielt von dem mit Federkraft beaufschlagten Material kompensiert.

Wesentliche Aspekte der dargestellten Ausführungsform sollen noch einmal zusammengefasst werden:

Die Erfindung betrifft eine Speisenträgerhalterung (A, B), die zur Aufnahme von Speisenträgern (y) wie Grillspießen dient. Die Halterung (A, B) wird mittels Federkraft auf handelsübliche Grillroste (R) aufgeklemmt und ist daher von Hand nachrüstbar. Durch eine kompakte Formgebung und die besondere Ausgestaltung mit rechtwinkelig zueinander angeordneten Aufnahmen (1a, 2a, T), ist eine vereinfachte und sichere Anwendung auf nahezu allen gebrauchsüblichen Grillrosten (R) mit feststehenden Roststäben möglich.

## Patentansprüche

1. Speisenträgerhalterung (A, B),
a) die dafür bestimmt ist, in einen Grillrost (R) eingesetzt zu werden und einen Speisenträger (y) beabstandet zum Grillrost (R) zu halten,
b) mit einem Kapitell (KA, KB), welches sich bei eingesetzter Speisenträgerhalterung (A, B) im Wesentlichen parallel zur Grillrost-Ebene erstreckt,
c) mit mindestens einem schwenkbar am Kapitell (KA, KB) angeordneten, mit Federkraft beaufschlagten Schenkel (s), der sich von dem Kapitell (KA, KB) fort erstreckt,
d) und der an seinem distalen Ende eine Kehle (v) aufweist, welche dafür eingerichtet ist, eine Grillrost-Strebe zumindest teilweise zu umgreifen,
e) und mit zwei sich jeweils entlang einer Aufnahmeachse erstreckenden Aufnahmen (1a, 2a; T) jeweils zur Lagerung eines Speisenträgers (y),
wobei die Aufnahmen (1a, 2a; T) nahe am Kapitell (KB) oder am Kapitell (KA) selbst angeordnet sind,
und wobei die beiden Aufnahmeachsen rechtwinkelig zueinander angeordnet sind.

2. Speisenträgerhalterung nach Anspruch 1, **dadurch gekennzeichnet, dass** die Aufnahmen (1 a, 2a) unmittelbar am Kapitell (KA) selbst angeordnet sind.

3. Speisenträgerhalterung nach Anspruch 1, **dadurch gekennzeichnet, dass** die Aufnahmen (T) am proximalen Ende des Schenkels (s) angeordnet sind

4. Speisenträgerhalterung nach Anspruch 1 oder 3, **dadurch gekennzeichnet, dass** eine Aufnahme (T) an einem von dem mit der Kehle (v) versehenen Schenkel (s) gesonderten Aufnahmeschenkel (sx) angeordnet ist.

5. Speisenträgerhalterung nach Anspruch 2, **dadurch gekennzeichnet, dass** die Aufnahmen (1a, 2a) jeweils als ein in das Kapitell (KA) eingeformter Kanal ausgeführt sind.

6. Speisenträgerhalterung nach Anspruch 3 und/oder Anspruch 4, **dadurch gekennzeichnet, dass** die Aufnahmen jeweils als ein Trichterloch (T) ausgeführt sind, welches sich vulkanartig aus der Speisenträgerhalterung (B) erhebt.

7. Speisenträgerhalterung nach Anspruch 6, **dadurch gekennzeichnet, dass** die Aufnahmeachse des Trichterlochs (T) die Grillrost-Ebene durchstößt

8. Speisenträgerhalterung nach mindestens einem der Ansprüche 1 bis 7, **dadurch gekennzeichnet, dass** die Speisenträgerhalterung zwei mit jeweils einer Kehle (v) versehene Schenkel (s) umfasst, die spiegelsymmetrisch zueinander angeordnet sind.

9. Speisenträgerhalterung nach mindestens einem der Ansprüche 1 bis 8, **dadurch gekennzeichnet, dass** die Speisenträgerhalterung (A, B) aus einem einzigen Federblech gefaltet ist.

10. Speisenträgerhalterung nach mindestens einem der Ansprüche 1 bis 8, **dadurch gekennzeichnet, dass** die Speisenträgerhalterung aus Federdraht gebogen ist.

## Claims

1. A food carrier holder (A, B),
a) which is intended for being inserted into a grill grate (R) and to hold a food carrier (y) so as to be spaced apart from the grill grate (R),
b) comprising a capital (KA, KB), which extends substantially parallel to the grill grate plane when the food carrier holder (A, B) is inserted,
c) comprising at least one journal (s), which is pivotally arranged on the capital (KA, KB) and to which a spring force is applied and which extends away from the capital (KA, KB),
d) and which, at its distal end, encompasses a flute (v), which is equipped to partially engage around a grill grate bar,
e) and comprising two receptacles (1a, 2a; T), which in each case extend along a receiving axis, in each case for supporting a food carrier (y),
wherein the receptacles (1a, 2a; T) are arranged close to the capital (KB) or at the capital (KA) itself,
and wherein the two receiving axes are arranged at right angles to one another.

2. The food carrier holder according to claim 1, **characterized in that** the receptacles (1a, 2a) are arranged directly at the capital (KA) itself.

3. The food carrier holder according to claim 1, **characterized in that** the receptacles (T) are arranged at the proximal end of the journal (s).

4. The food carrier holder according to claim 1 or 3, **characterized in that** one receptacle (T) is arranged at a receiving journal (sx), which is separate from the journal (s), which is provided with the flute (v).

5. The food carrier holder according to claim 2, **characterized in that** the receptacles (1a, 2a) are in each case embodied as a channel, which is integrally molded in the capital (KA).

6. The food carrier holder according to claim 3 and/or claim 4, **characterized in that** the receptacles are embodied as a funnel hole (T), which rises out of the food carrier holder (B) in a volcano-like manner.

7. The food carrier holder according to claim 6, **characterized in that** the receiving axis of the funnel hole (T) pushes through the grill grate plane.

8. The food carrier holder according to at least one of claims 1 to 7, **characterized in that** the food carrier holder comprises two journals (s), which are in each case provided with a flute (v) and which are arranged in a mirror-symmetrical manner to one another.

9. The food carrier holder according to at least one of claims 1 to 8, **characterized in that** the food carrier holder (A, B) is folded from a single spring steel sheet.

10. The food carrier holder according to at least one of claims 1 to 8, **characterized in that** the food carrier holder is bent out of spring wire.

## Revendications

1. Fixation pour support d'aliments (A, B),
a) qui est prévue pour être intégrée dans une grille de rôtissoire (R) et pour tenir un support d'aliments (y) à distance de la rôtissoire (R),
b) avec un chapiteau (KA, KB), qui lorsque la fixation pour support d'aliments (A, B) est intégrée s'étend sensiblement à la parallèle du plan de la grille de rôtissoire,
c) avec au moins une branche (s) disposée de manière pivotante sur le chapiteau (KA, KB), s'étendant en s'éloignant du chapiteau, (KA, KB), soumise à la force d'un ressort,
d) et qui sur son extrémité distale comporte une gorge (v) qui est ménagée de sorte à entourer au moins en partie une entretoise de la grille de rôtissoire,
e) et avec deux logements (1a, 2a, T) s'étendant chacun le long d'un axe de logement, chacun pour loger un support d'aliments (y),
les logements (1a, 2a ; T) étant disposés à proximité du chapiteau (KB) ou sur le chapiteau (KA) même
et les deux axes de logement étant disposés à la perpendiculaire l'un de l'autre.

2. Fixation pour support d'aliments selon la revendication 1, **caractérisée en ce que** les logements (1a, 2a) sont disposés directement sur le chapiteau (KA) même.

3. Fixation pour support d'aliments selon la revendication 1, **caractérisée en ce que** les logements (T) sont disposés sur l'extrémité proximale de la branche (s).

4. Fixation pour support d'aliments selon la revendication 1 ou 3, **caractérisée en ce qu'**un logement (T) est disposé sur une branche de logement (sx) séparée de la branche (s) munie de la gorge (v).

5. Fixation pour support d'aliments selon la revendication 2, **caractérisée en ce que** les logements (1a, 2a) sont réalisés chacun en tant qu'un canal moulé dans le chapiteau (KA).

6. Fixation pour support d'aliments selon la revendication 3 et/ou la revendication 4, **caractérisée en ce que** les logements sont réalisés chacun en tant que trou d'entonnoir (T) qui s'élève à la manière d'un volcan hors de la fixation pour support d'aliments (B).

7. Fixation pour support d'aliments selon la revendication 6, **caractérisée en ce que** l'axe de logement du trou d'entonnoir (T) traverse le plan de la grille de rôtissoire.

8. Fixation pour support d'aliments selon au moins l'une quelconque des revendications 1 à 7, **caractérisée en ce que** la fixation de support d'aliments comprend deux branches (s) munies chacune d'une gorge (v) qui sont disposées en symétrie spéculaire l'une par rapport à l'autre.

9. Fixation pour un support d'aliments selon au moins l'une quelconque des revendications 1 à 8, **caractérisée en ce que** la fixation pour support d'aliments (A, B) est pliée à partir d'une seule tôle élastique pour ressorts.

10. Fixation pour support d'aliments selon au moins l'une quelconque des revendications 1 à 8, **caractérisée en ce que** la fixation pour support d'aliments est cintrée dans un fil d'acier pour ressorts.
